(19)

Europäisches
Patentamt
European
Patent Office
Office européen
des brevets

(11) **EP 2 233 314 A1**

(12) **EUROPEAN PATENT APPLICATION**

(43) Date of publication:
29.09.2010 Bulletin 2010/39

(51) Int Cl.:
*B42D 15/00* (2006.01)       *B42D 15/10* (2006.01)
*G07D 7/06* (2006.01)

(21) Application number: 09156340.3

(22) Date of filing: 26.03.2009

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **CSEM Centre Suisse d'Electronique et
de
Microtechnique SA - Recherche et
Développement
2002 Neuchâtel (CH)**

(72) Inventors:
• **Seitz, Peter**
**8902 Urdorf (CH)**
• **Nüesch, Joachim**
**8004 Zürich (CH)**

(74) Representative: **Schneider Feldmann AG
Patent- und Markenanwälte
Beethovenstrasse 49
Postfach 2792
8022 Zürich (CH)**

(54) **Authentication item and system for packaged articles and method for the manufacturing of
the authentication item**

(57)    The present invention discloses, inter alia, an
authentication item manufactured on goods for encoding
the goods as being authentic. The authentication item is
an intensity-modulating surface comprising a plurality of
adjacent protrusions such that the intensity-modulating
surface has alternating height. Each of the protrusions
has at least two slopes of respective different orientation.
When being in an authenticating position with respect to
incident electromagnetic radiation employed for authen-
tication, the authentication item modulates the intensity
of the electromagnetic radiation in a manner that generates an intensity profile which is characteristic of the au-
thentication item. In the authentication position, the prop-
agation direction of the incident electromagnetic radiation is at least approximately parallel to one of the at least
two slopes of the plurality of protrusions.

FIG. 4A

EP 2 233 314 A1

**Description**

**FIELD OF THE INVENTION**

The present invention relates to the field of authentication and more specifically, to the verification of the authenticity of goods on sale.

**BACKGROUND OF THE INVENTION**

Counterfeiting of goods considered to be valuable such as, for example, pharmaceuticals like, e.g., prescription drugs, non-prescription drugs; luxury articles like, e.g., watches, jewelry, brand-name apparel; consumer electronic goods; food from declared geographical origin like, e.g., wine and cheese; and/or machine-readable media such as, for example, Compact-Disc records, Digital Versatile Discs (DVD), blue-ray discs, computer-game media storing valuable information erodes or diminishes the return of investment of, e.g., the developer and/or manufacturer and/or vendor and/or licensor and/or marketer of the authentic product, thus discouraging launching the development and/or the marketing of new products. Accordingly, counterfeiting of articles poses a danger to the world's economy and is counterproductive to innovation. Moreover, counterfeiting articles may in some cases have the potential of negatively affecting consumer wellbeing. For example, counterfeited pharmaceuticals and/or foods may not be subjected to stringent regulations performed, e.g., Food and Drug Administration (FDA), and/or counterfeited brand apparel not being subjected to standardized tests may for example, be more easily inflammable than the authentic apparel, thereby potentially adversely affecting the consumer's health. Moreover, counterfeiting goods may give rise to commercial, since the customer may pay the same price for counterfeited goods as for authentic goods.

Various methods outlining how counterfeited goods may be distinguished from authentic goods, for example, by various constituents of the value chain, such as individual consumers, retailers, wholesalers, original producers, as well as law enforcement or customs officials, are described in the literature. For example, patent application WO2006/027688 to Walter, describes an article such as a medicinal tablet or a foodstuff having a microstructured surface such that white light incident on the microstructure will be reflected at a number of different wavelengths dependent on the angle of incidence of the white light on the structure, thereby possibly providing structure an indication of authenticity of the article. To authenticate the article, the packaging thereof must either be sufficiently transparent to allow impingement of white light on and generate reflection from the structure discernible by an observer. Alternatively, the article must be unpacked or unwrapped prior to verifying authenticity.

The scattering and/or absorption of light by packaging of articles may be reduced by probing the article subject to verification of its authenticity with infrared light due to the increase in transmissivity of infrared compared to white light through at least some of the packaging materials used such as, for example, cardboard and plastic. An authentication method employing radiation of the infrared range is described in patent application US20080199406 to Walter et al., which requires interferometric read-out of the authenticating label.

Patent application US2003/0194053 to Schramm et al. discloses an apparatus and methods in which one or more elemental taggants that are extrinsically placed in an object are detected by X-ray fluorescence analysis to identify or authenticate the object. The taggant is manufactured as part of the object or the taggant is placed into a coating, packaging, label, or otherwise embedded onto the object for the purpose of later verifying the presence or absence of these elements by X-ray fluorescence. The taggant is then analyzed by X-ray fluorescence analysis, and the analysis is then converted into a 2D symbol format that can be used in various security and authentication applications. This apparatus and methods require specific labeling of the goods.

Patent application EP1348575 to Landqart discloses a security item which is characterized by at least one security element having at least one segment comprising at least one latent UV or IR absorber. A latent absorber is a compound or composition capable of liberating a UV absorber on demand. Preferentially, the latent absorber is converted to its absorbing form in a spatially resolved manner thus providing the desired information as latent image. Information imprinted within a substrate containing said absorbers is invisible to the naked eye. Moreover, the information is also invisible under UV irradiation. Only if a photoluminescent screen or background is used under UV irradiation, the "imprinted" information becomes apparant as a shadow image on the photoluminescent screen, since, in the areas where the latent absorber has been converted to the UV absorber, the UV light is being absorbed and does not reach the photoluminiscent device. This authentication method requires the marking of the security item with additional chemicals.

**DESCRIPTION OF THE FIGURES**

These and further features and advantages of the invention will become more clearly understood in the light of the ensuing description of a some embodiments thereof, given by way of example only, with reference to the accompanying figures (FIGs), wherein:

**FIG. 1** is a general schematic side view illustration of an intensity-profiling arrangement;

**FIG. 2** is a schematic side view illustration of the intensity-profiling arrangement employing an object in a non-authenticating position, wherein the upper and lower side of the object comprise a respective intensity-modulating surface, according to an embodiment of the invention;

**FIG. 3A** is a schematic side view illustration of an object, wherein the upper and lower side of the object comprise intensity-modulating surface in authentication positions with respect to incident electromagnetic radiation, according to an alternative embodiment of the invention;

**FIG. 3B** is a schematic side view illustration of an object, wherein the upper and lower side of the object comprise intensity-modulating surfaces in authentication positions with respect to incident electromagnetic radiation, according to another embodiment of the invention;

**FIG. 3C** is a schematic side view illustration of an object, wherein the upper and lower side of the object comprise intensity-modulating surfaces in authentication positions with respect to incident electromagnetic radiation, according to a yet alternative embodiment of the invention;

**FIG. 4A** is a schematic side view illustration of the intensity-profiling arrangement employing the object of **FIG. 2**, wherein the object is in a first authenticating position, according to an embodiment of the invention;

**FIG. 4B** is a schematic side view illustration of the intensity-profiling arrangement employing the object of **FIG. 2**, wherein the object is in a second authenticating position, according to another embodiment of the invention;

**FIG. 5A** is a schematic side view illustration of an object only one side of which comprises an intensity-modulating surface, according to an embodiment of the invention;

**FIG. 5B** is a schematic side view illustration of the object of **FIG. 5A** constituting a substrate for a contrast-enhancing layer, according to an embodiment of the invention;

**FIG. 6** is a schematic side view illustration of goods comprising packaging having an intensity-modulating surface which is in an authenticating position with respect to incident electromagnetic radiation, according to an embodiment of the invention;

**FIG. 7A** is a schematic side view illustration of goods comprising an article having an intensity-modulating surface which is in an authenticating position with respect to the incident electromagnetic radiation, wherein a radiation detector device is in a first sensing position, according to an embodiment of the invention;

**FIG. 7B** is a schematic side view illustration of goods comprising the article having the intensity-modulating surface which is in the authenticating position with respect to the incident electromagnetic radiation, wherein the radiation detector device is in a second sensing position, according to another embodiment of the invention;

**FIG. 8** is a schematic illustration of an authentication system, according to an embodiment of the invention;

**FIG. 9** is a schematic illustration of an authentication system, according to another embodiment of the invention;

**FIG. 10** is a schematic illustration of an authentication system, according to an alternative embodiment of the invention;

**FIG. 11A** is an image representation of an intensity profile of an object having an intensity-modulating surface implemented by periodical pyramids of which slopes are in a authenticating position with respect to the incident electromagnetic radiation; and

**FIG. 11B** is an image representation of an intensity profile of the object of **FIG. 10A** wherein the periodical pyramids are in a non-authenticating position with respect to the incident electromagnetic radiation.

## DESCRIPTION OF THE INVENTION

It should be noted that the term "article" as used herein refers to as any object that is packaged or wrapped by packaging. However, to simplify the discussion that follows, the terms "article" or "articles" as well as the corresponding optional packaging may hereinafter sometimes be respectively or collectively referred to as "goods".

Positional terms such as "upper", "lower" "right", "left", "bottom", "below", "lowered", "low", "top", "above", "elevated", "high", "vertical" and "horizontal" as well as grammatical variations thereof as may be used herein do not necessarily indicate that, for example, a "bottom" component is below a "top" component, or that a component that is "below" is indeed "below" another component or that a component that is "above" is indeed "above" another component as such directions, components or both may be flipped, rotated, moved in space, placed in a diagonal orientation or position, placed horizontally or vertically, or similarly modified. Accordingly, it will be appreciated that the terms "bottom", "below", "top" and "above" may be used herein for exemplary purposes only, to illustrate the relative positioning or placement of certain components, to indicate a first and a second component or to do both.

Summary of the invention:

The present invention discloses an authentication item manufactured on goods for encoding the goods as being authentic.

In embodiments, the authentication item is an intensity-modulating surface comprising a plurality of adjacent protrusions such that the intensity-modulating surface has alternating height; wherein each of the protrusions has at least two slopes of respective different orientation; wherein the authentication item, when being in an authenticating position with respect to incident electromagnetic radiation employed for authentication, modulates the intensity of the electromagnetic radiation in a manner that generates an intensity profile which is characteristic of the authentication item.

In embodiments, the authenticating position is attained if the propagation direction of the incident electromagnetic radiation is at least approximately parallel to one of the at least two slopes of the plurality of protrusions.

In embodiments, the intensity-modulating surface is the surface of the goods.

In embodiments, the intensity-modulating surface is a contrast-enhancing layer provided on the surface of the goods constituting the substrate for the contrast-enhancing layer, wherein the contrast-enhancing layer effects an increased attenuation of intensity of the incident electromagnetic radiation, compared to the attenuation effected by the goods.

In embodiments, the contrast-enhancing layer has a thickness ranging, for example, between 5 nm to 1 mm.

In embodiments of the invention, a method of manufacturing the authentication item according to any of the preceding claims may include at least one of the following procedures: printing, embossing, molding, injection-molding and thermoforming.

In embodiments, thermoforming may include, inter alia, the following procedures: preheating a plastic film to a preheat temperature to obtain a moldable plastic film; molding a blister cavity into the moldable plastic film by applying a molding pressure to obtain a molded plastic film; and cooling down the molded plastic film such that the molded plastic film maintains its shape.

In embodiments, the molding pressure ranges from 4 to 8 bars.

The present invention also discloses an authentication system for the authentication of goods.

In embodiments, the an authentication system may comprises an inspection platform adapted to receive the goods; a radiation source adapted to emit electromagnetic radiation incident on the goods; and a radiation detector device adapted to detect electromagnetic radiation transmitted through the goods; wherein the radiation source and the inspection platform are operative such that the propagation direction of the electromagnetic radiation incident on the goods is adjustable to different orientations, thereby enabling the detection of intensity profiles of the transmitted electromagnetic radiation for the different orientations to search for an intensity profile that is characteristic of an authentication item manufacturable on goods.

In embodiments, the radiation source and the radiation detector device are encased in a portable housing.

In embodiments, the inspection platform is also encased in the portable housing.

In embodiments, the electromagnetic radiation is in the X-ray or infrared range.

In embodiments, the inspection platform is a rotatable turntable that enables obtaining the different orientations between the propagation direction and the goods.

In embodiments, the radiation source is displaceable to different positions to obtain the different orientations between the incident electromagnetic radiation and the goods.

Detailed description of the invention:

Embodiments of the present invention disclose an authentication item manufacturable on goods, as well as a system and method for the authentication of goods, e.g., a system and method for the authentication goods obviating inter alia the need for unpacking or damaging the articles for authentication, whereby the packaging material may be made of a variety of materials such as, for example, organic materials like, e.g., paper, cardboard, plastics, wood or other plant-based matter having a security feature manufactured thereon.

According to embodiments of the invention, the authentication item, when being in an authenticating position with respect to incident electromagnetic radiation employed for authentication, modulates the intensity of the electromagnetic radiation in a manner that generates an intensity profile that is characteristic of the authentication item.

According to embodiments of the disclosed technique, the authentication item is a one- or two-dimensional intensity-modulating surface embodied, for example, by a corrugated surface. The corrugated surface may be embodied, for example, by a plurality of periodical pyramids having first and second slopes. Alternatively, the corrugated surface may be embodied, for example, by a plurality of ramp-like shaped protrusions of which one slope of each protrusion is at least approximately normal to an imaginary line connecting the lowest points of the corrugated surface.

Embodiments of the disclosed method and system comprise and enable the procedure of irradiating the goods with electromagnetic radiation, hereinafter "authenticating radiation", whereby the electromagnetic radiation incident on the goods is hereinafter referred to as "incident electromagnetic radiation ", and electromagnetic radiation passing through and emanating from the goods as a result of the incident electromagnetic radiation is hereinafter referred to as "transmitted electromagnetic radiation".

According to embodiments of the disclosed invention, the intensity-modulating surface of the authentication item is configured such that the intensity profile of the incident electromagnetic radiation is modulated into a desired detectable modulated one- or two-dimensional intensity profile of the transmitted electromagnetic radiation, which is visualized for authentication.

Correspondingly, embodiments of the system and method may enable and may comprise, respectively, the procedures of detecting the resulting intensity profile of the transmitted electromagnetic radiation, visualizing the intensity profile of the transmitted electromagnetic radiation, observing the intensity profile, and comparing the resulting intensity profile with the desired intensity profile for authentication. If the resulting intensity profile matches the desired intensity profile, authenticity of the article(s) and/or the packaging is verified. Conversely, if the resulting intensity profile does not match the desired intensity patter, authenticity of the article(s) and/or of the packaging is not verified. The desired intensity profile is a function of a corrugation pattern manufactured on the surface of either the article(s) or the packaging thereof. The surface is herein referred to as "intensity-modulating surface". Correspondingly, the corrugation pattern on the surface of the article(s) and/or the packaging encodes authentication information.

According to embodiments of the disclosed technique, the intensity-modulating surface comprises a plurality of protrusions, wherein each protrusion feature has at least two slopes of different orientation. A first slope of the at least two slopes has a first orientation and a second slope of the at least two slopes has a second orientation. In embodiments, a first slope may pass over to a second slope, which again passes over to a first slope and so forth, i.e., first and second slopes may be adjacent to one another in an alternating manner such that the intensity modulating surface has alternating height.

According to embodiments of the invention, irradiation of the goods occurs at an angle with respect to the intensity-modulating surface such that the first slopes are at least approximately in alignment or in other words at least approximately parallel to the propagation direction of the incident electromagnetic radiation, whereas the second slopes are not parallel to the propagation direction. As a consequence, the radiation intensity of the incident electromagnetic radiation impinging on the first slopes is attenuated along or in correspondence with the length of the first slope, compared to the radiation intensity of the incident electromagnetic radiation impinging on the second slopes. The difference in attenuation of radiation intensity caused by the particular orientation of the first and second slopes with respect to the propagation direction generates a corresponding desired intensity profile of the transmitted electromagnetic radiation, wherein the desired intensity profile is detectable and thus comparable with an intensity profile generated by goods that are not unauthentic. According to embodiments of the invention, the contrast of the desired intensity profile to be obtained by the intensity-modulating surface, which may be defined as follows by the following equation:

$$Contrast = \frac{I_{max} - I_{min}}{I_{max} + I_{min}} \qquad (1)$$

may be, for example, at least 0.001, 0.01, or 0.05, wherein, $I_{max}$ and $I_{min}$ are the detected maximum and the minimum intensity value of the desired intensity profile.

As outlined hereinafter, embodiments of the present invention employ electromagnetic radiation for the authentication of packaged articles, such to enable contact-less authentication of articles. In other words, embodiments of the authentication method and system obviate the need of unpacking or unwrapping and/or direct physical contact of articles, e.g., by a person, for determining the authenticity of goods. As a consequence, the need of deliberately damaging the packaging for authenticating the packaged articles is obviated. Further, the danger of unintentionally damaging of goods due to physical contact with the person performing authentication is minimized.

According to embodiments of the invention, the authentication system is a portable system comprising the radiation source, the radiation detector device and an inspection platform all of which are in relative position to each other such that goods are engageable with the inspection platform positioning the article to the authenticating position.

Embodiments of the authentication method are compatible with conventionally used packaging materials or procedures and may be employed in combination with alternative authentication systems and/or methods, e.g., as used in the art.

Methods for manufacturing the intensity-modulating surface on goods include, e.g., printing, embossing, molding, and in particular especially injection-molding and thermoforming. These manufacturing methods are even capable of realizing such intensity-modulating surfaces directly on articles like, e.g., pills, besides of being manufacturable on packaging material. Any of these manufacturing methods and the tools needed for performing the methods requires considerable expertise and effort, thereby incumbering attempts of counterfeiting goods.

According to embodiments of the disclosed technique, of the desired intensity profile may be improved by coating the goods with a layer of material whose absorptive properties for the used electromagnetic radiation differ significantly from those of the layer's substrate, which is embodied by the goods.

According to embodiments of the disclosed invention, the wavelength of the electromagnetic radiation is chosen such that the goods and optionally the intensity-modulating surface is partially transparent to the radiation (corresponding to absorption values of 0.1% to 99.9% of the incident intensity) and causes only moderate (1%-10% of the incident intensity) or negligible (<1% of the incident intensity) radiation scattering.

According to embodiments of the invention, goods may be irradiated with electromagnetic radiation of the infrared spectral region with a wavelength range of, for example, 800 nm - 10000 nm, and/or of the X-ray spectral region at a wavelength range of for example, 0.0025 - 0.1 nm, whereby the photon energy for both the infrared and the X-ray spectral region may range, for example, between 10 keV to 500 keV. At these wavelength ranges, packaging materials such as paper, cardboard, plastics, wood and/or other organic material can be fairly transparent, exhibiting typical absorption values of, e.g., 1%-99% of the incident radiation.

To enable potentially achieving a detectable contrast by a radiation detector device, the distance between a radiation source of the incident electromagnetic radiation and the goods for which authentication is verified, may not exceed a certain threshold for the ranges of energy exemplified herein. For example, for incident electromagnetic radiation being in the X-ray spectrum, the distance between the radiation source and an object may range, e.g., from 1 cm to 50 cm, and the distance between object and radiation detector device may range, e.g., from 10 cm to 100 cm.

Under these conditions, the contrast-enhancing layer on the embossed material has a different elemental composition and/or a different density from the underlying substrate or both.

The authentication method can be combined with a plurality of other known or future authentication methods for increased security.

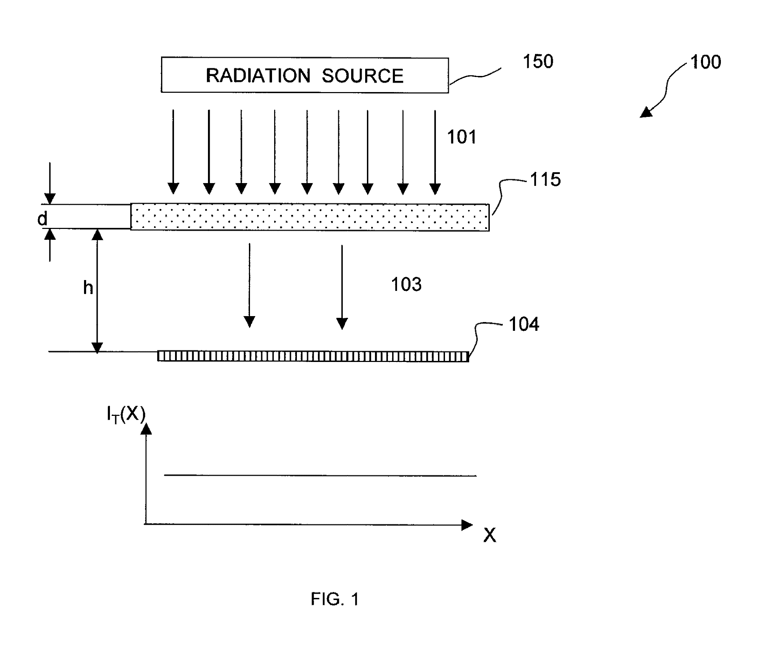

Reference is now made to **FIG. 1.** As is known in the art, an schematically illustrated and outlined with reference to an intensity profiling arrangement **100,** an object **115** may partially absorb only a fraction of incident electromagnetic radiation **101** of authenticating radiation emanating from a radiation source **150,** resulting in that transmitted electromagnetic radiation **103** emanates from object 115, wherein transmitted electromagnetic radiation **103** may be detected by a radiation detector device **104.** If object **115** is homogeneous for the wavelength of incident electromagnetic radiation **101,** and the thickness d of object **115** is at least approximately equal with respect to the propagation direction of incident electromagnetic radiation **101** through object **115,** then the transmitted radiation intensity $I_T(x)$ of transmitted electromagnetic radiation **103** does not vary as a function of the lateral position x, as is schematically illustrated by the graph, provided that the distance H along lateral position x between radiation detector device **104** and radiation source **150** for incident electromagnetic radiation **101** is at least approximately constant and the intensity of the emanating wavefront is laterally at least approximately equally distributed.

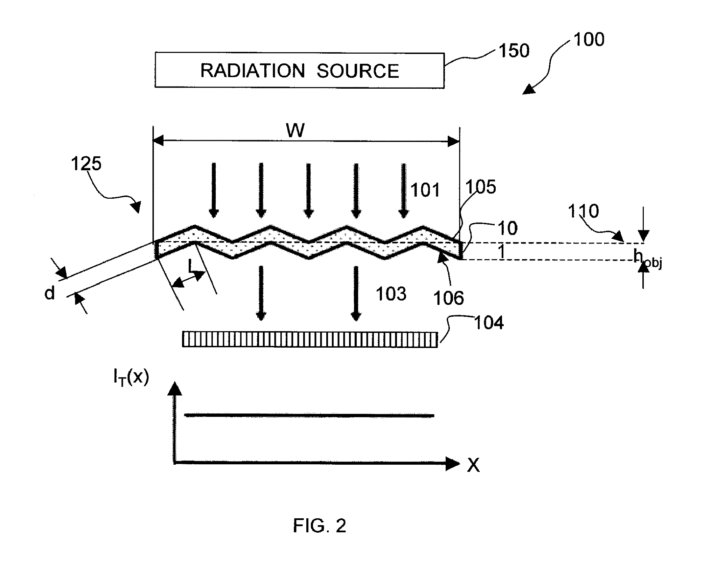

Reference is now made to **FIG. 2.** According to embodiments of the invention, object **115** may be marked for authentication by rendering the same to become intensity-modulating, which may be achieved, for example, by shaping object **115** such to feature an upper intensity-modulating surface **105** having, for example, varying height, to obtain object **125.**

According to embodiments of the invention, shaping object **115** to become intensity-modulating may be achieved, for example, by embossing object **115.** If the material of object **115** is hardly compressible, i.e. the plastic deformation causes a lasting change of density of less than 5%, such as, for example, metallic materials, then the process of manufacturing intensity-modulating object **125** may produce an at least approximately conformal shaping of object **115** generating besides upper intensity-modulating surface **105** also a lower intensity-modulating surface **106** of object **125,** such that the distance **d** between upper intensity-modulating surface **105** and lower intensity-modulating surface **106** remains at least approximately constant. If intensity-modulating object **125** is positioned such that the propagation direction of incident electromagnetic radiation 101 is at least approximately perpendicular to an imaginary line **110** connecting between the lowest points of upper intensity-modulating surface **105,** then incident electromagnetic radiation **101** is subjected to an at least approximately uniform attenuation across lateral distance x, due to the insignificant variation of the height $h_S$ of intensity-modulating surface **105** of object **125.** In other words, differences in attenuation to which incident electromagnetic radiation **101** may subjected to are negligible or non-detectable. As a result, transmitted electromagnetic radiation **103** features an intensity profile that is at least approximately constant or for which the differences in intensity modulation along lateral distance x is negligible, despite the embossed height variations of upper intensity-modulating surface **105** and optionally of lower intensity-modulating surface **106.** Accordingly, object **125** and its corresponding authentication item, namely upper intensity-modulating surface **105** and/or lower-intensity modulating surface **106** is set to be in a non-authenticating position. As is schematically illustrated in **FIG. 2.** intensity-modulating surface **105** may in on embodiment have a pyramid-like structure.

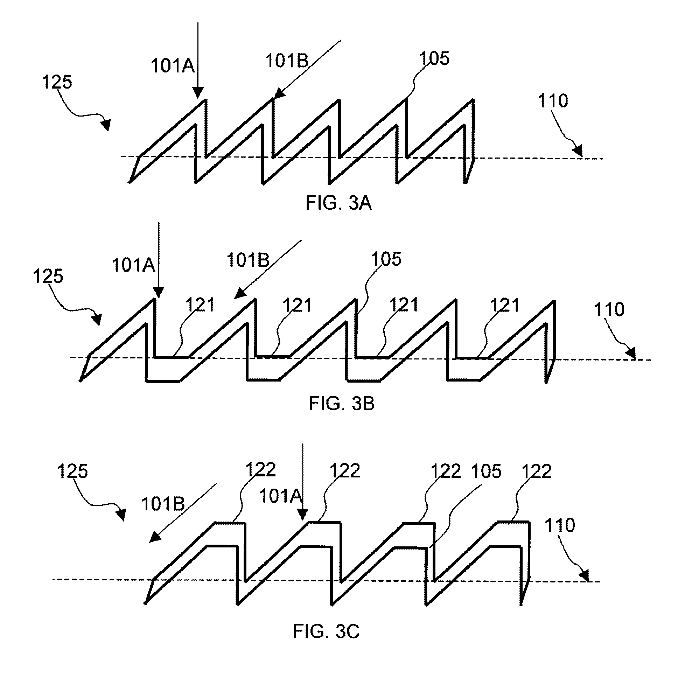

With reference to **FIG. 3A, FIG. 3B** and **FIG. 3C,** intensity-modulating surface **105** may comprise ramp-liked protrusion of which one of slope of each protrusion is at least approximately normal to an imaginary line connecting the lowest points of upper intensity-modulating surface **105.** As is schematically illustrated in **FIG. 3B**, adjacent protrusion of upper intensity-modulating surface **105** may be spaced apart by a plane-like trough **121.** Alternatively, as is schematically illustrated in **FIG. 3B**, each protrusion may comprise a respective plateau **122.** Relative positions between upper intensity-modulating surface **105** and direction of propagation of incident electromagnetic radiation **101** are schematically illustrated with corresponding arrows **101A** and **101B.**

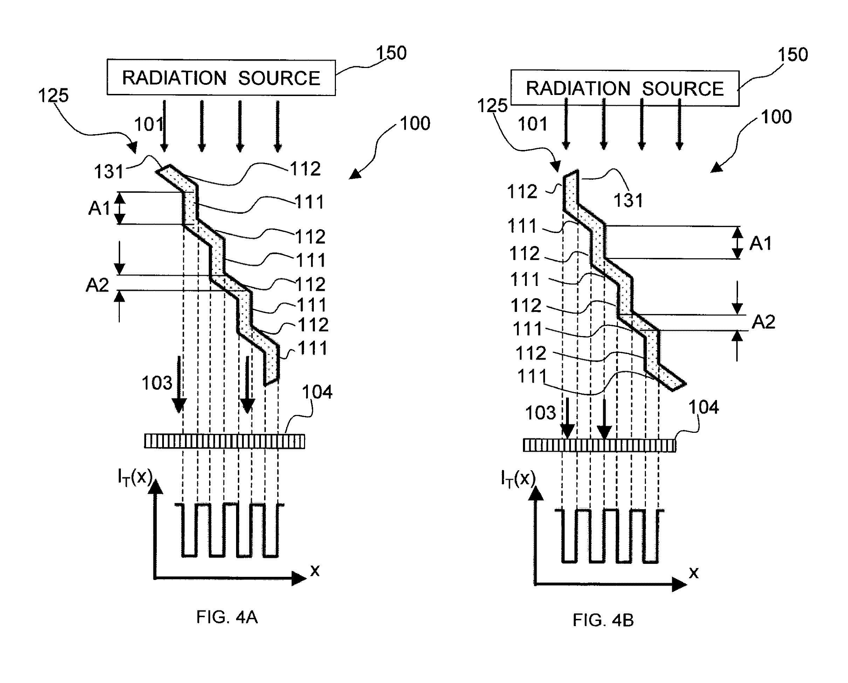

Additional reference is now made to **FIG. 4A** and **FIG. 4B.** According to embodiments of the disclosed invention, object **125** may be set with respect to the radiation source **150** into an authenticating position such that at least some of the intensity of incident electromagnetic radiation **101** passing through object **125** is subjected to intensity modulation resulting in differences in amplitude of transmitted electromagnetic radiation **103,** wherein the differences amplitude depends on the lateral position x and are characteristic of upper intensity-modulating surface **105** and lower intensity-modulating surface **106.** More specifically, rotated object **125** may be set into first or second authenticating positions relative to the propagation direction of incident electromagnetic radiation **101** such that either first slopes **111 (FIG. 4A)** or second slopes **112 (FIG. 4B),** respectively, are at least approximately parallel to incident electromagnetic radiation **101.**

Correspondingly, as is schematically illustrated in **FIG. 4A,** in the first position, intensity of incident electromagnetic radiation **101** when passing through first slopes **111** is subjected to attenuation along a distance **A1** that corresponds to the length of first slopes **111,** which is significantly higher than the distance **A2** along which incident electromagnetic radiation **101** suffers attenuation, e.g., due to absorption, when passing through second slopes **112,** i.e., **A1 > A2.** Therefore, lowest intensity $I_T$ as a function of lateral position x is measured at the position of first slopes **111,** whereas highest intensity $I_T$ is measured at the position of second slopes **112.**

Conversely, if object **131** is in the second authenticating position, as is schematically illustrated in **FIG. 4B**, intensity of incident electromagnetic radiation **101** when passing through first slopes **111** suffers attenuation along distance **A2,** whereas when passing through second slopes **112** the intensity suffers attenuation along distance-**A1**. Therefore, intensity $I_T$ as a function of lateral position **x** is lowest at the position of second slopes **112,** and highest at the lateral position **x** of first slopes **111.** In any event, the intensity modulation exhibited by rotated object **125** is detectable by radiation detector device **104.**

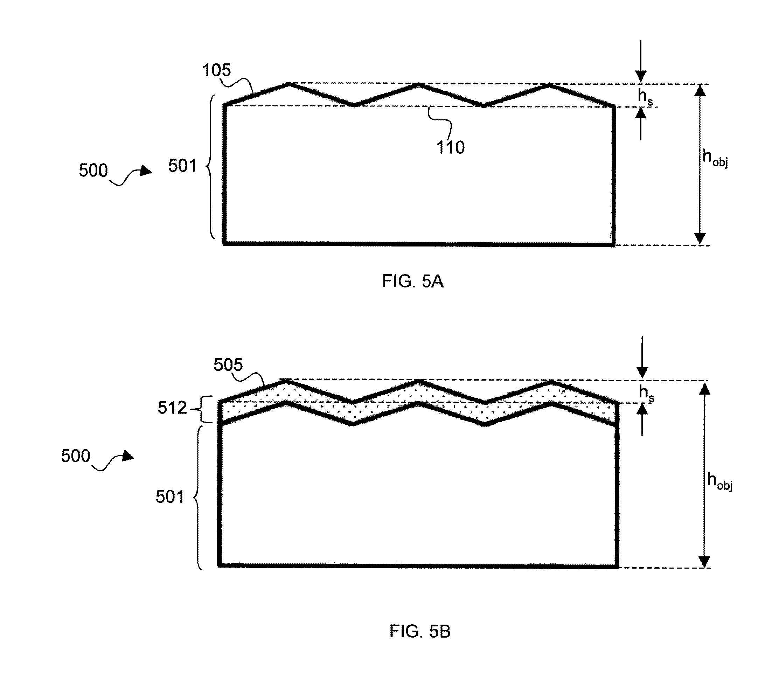

Further referring now to **FIG. 5A,** an object **500** may comprise only one, e.g., upper intensity-modulating surface **105,** i.e., the shaping of object **500** is non-conformal. An intensity-modulating object such as, for example, object **500,** may be an integrally formed with an article or articles and/or may be an integrally formed with packaging of the article (s). The article(s) may be embodied, for example, by pharmaceuticals, whilst the packaging may be embodied, for example, by blister packaging. Non-conformal shaping for generating object **500** may be suitable for packaging that is abutting or adjacent to the packaged article(s).

It should further be noted that in some embodiments of the invention, height h of intensity-modulating surface $h_S$ may be significantly smaller than the height $h_{obj}$, i.e., **$h_s << h_{obj}$.** For example, $10^* h_s = h_{obj}$, or $100^* h_s = h_{obj}$, whereby $h_s$ may range, e.g., between 1-50 micrometers. This range for **$h_s$** may be desirable if the intensity-modulating profile should be invisible for the naked eye. Clearly, with **$h_s$** of these measures, the intensity attenuation that incident electromagnetic radiation **101** suffers through substrate **501** of object **500** is much larger than the absorption variation created by upper intensity-modulating surface **105.** The length L of first slopes **111** and second slopes **112** may range, for example, between 100 μm - 1mm. Generally, **$h_s$** of an intensity-attenuating surface such as, for example, surface **105,** may range, for example, between 10% -100% of length L, whereby the overall width **W** may range, for example, from 100 μm to about 50 mm millimeters long.

As is schematically illustrated in **FIG. 5B,** to increase intensity-modulating properties of object **500,** its substrate **501** may be covered by a thin and at least approximately uniform contrast-enhancing layer **512** having, for example, increased intensity-attenuating properties compared to substrate **501.** The thickness of contrast-enhancing layer **512** may range, for example, between 5 nm to 1 mm.

The intensity-attenuating properties of contrast-enhancing layer **512** for the employed spectrum of incident electromagnetic radiation **101** may be significantly larger than those of substrate **501,** i.e. the linear attenuation coefficient of contrast-enhancing layer **512** should be at least 1% higher than that of substrate **501,** and it may be 1000 times higher. Therefore, contrast-enhancing layer **512** enhances the contrast in differences of attenuation, compared to the contrast that would be obtained without contrast-enhancing layer **512.** Contrast-enhancing layer **512** may be made of various materials such as, for example, aluminum, nickel, gold, silver, cesium iodide.

The thickness of contrast-enhancing layer **512** must be significant smaller than L e.g. at most 10% of the length L. This provides for sufficient lateral contrast when irradiating surface **505** in either of first or second position, as is schematically illustrated in **FIG. 4A** and **FIG. 4B,** respectively.

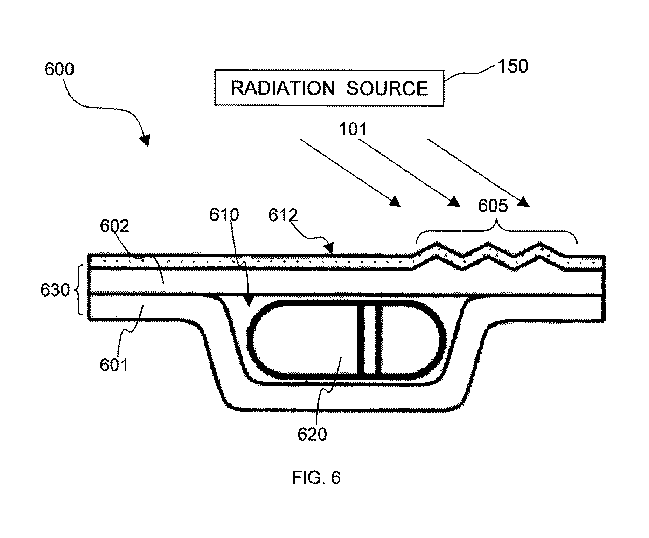

Additional reference is now made to **FIG. 6.** Goods **600** may comprise packaging 630 containing an article exemplified by a pill **620.** Packaging **530** may be embodied by a blister packaging comprising a concavely formed covering material **601** which may be for example adhesively coupled to a generally planar base material **602** to form a cavity **610** adapted to hold pill **620.** Both covering material **601** and base material **602** may be made of optically transparent, molded plastics. A contrast-enhancing layer **612** may be provided on base material **602,** which constitutes the substrate for contrast-enhancing layer **612.** Contrast-enhancing layer **612** comprises an intensity-modulating portion **605.** As a consequence, base material **602** may encode authentication information enabling the verification of the authenticity of the blister packaging. As outlined hereinabove, the authenticity may be verified by irradiating base material **602** with incident electromagnetic radiation **101**, whereby base material **602** is either in first or second position relative to incident electromagnetic radiation **101.** It should be noted that additionally or alternatively, contrast-enhancing layer **612** may be provided on covering material **601** (not shown). Contrast-enhancing layer **612** may affect absorption or attenuation of intensity that is significantly larger increased compared to the absorption or attenuation of intensity of base material **602.** Since blister packages employed for pharmaceutical use may contain a thin layer of optically opaque aluminum, the same may be employed as contrast-enhancing layer **612,** if, for example, X-ray radiation is used for the irradiation of the packaging.

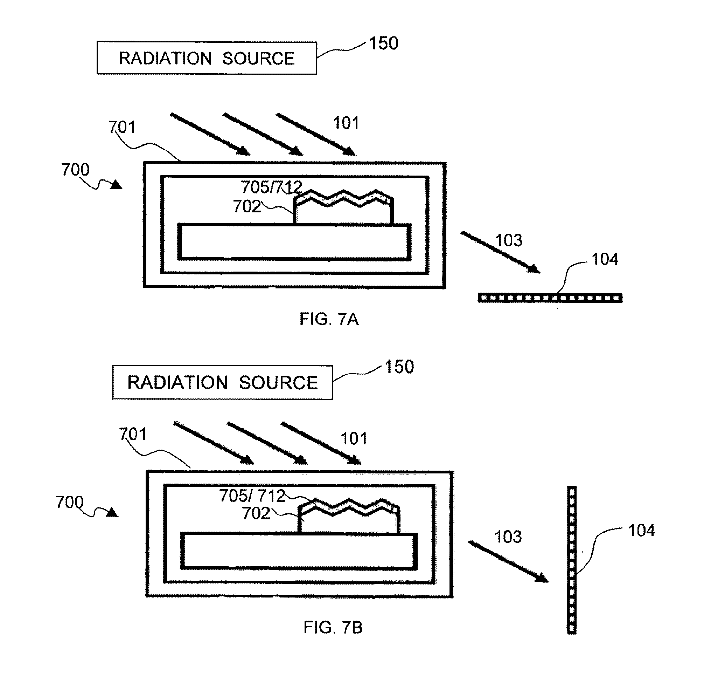

Referring to FIG. **7A** and FIG. **7B,** further embodiments of the present system and method are schematically illustrated with respect to goods **700,** comprising a packaging **701** for an article **702** wherein a contrast-enhancing layer **712** is provided on article **702** having an intensity-modulating surface **705.** Different positions for radiation detector device **104** relative to goods **700** and incident electromagnetic radiation **101** are schematically illustrated in **FIG. 7A** and **FIG. 7B,** respectively, to adjust for higher contrast of transmitted electromagnetic radiation **103** detected by radiation detector device **104.**

Depending on the reproducibility with which the packaging process is executed, it may not be possible to determine the exact orientation of intensity-modulating surface **705** with respect to packaging **701** of goods **700.** It may be necessary, therefore, to vary the orientation of goods **700** with respect to the propagation direction of incident electromagnetic radiation **101** to find the angular orientation resulting in maximum contrast of the transmitted intensity profile for the transmitted electromagnetic radiation **103.** Authentication systems according to embodiments of the invention that enable varying the orientation of goods **700** with respect to the propagation direction of incident electromagnetic radiation **101** are outlined herein below.

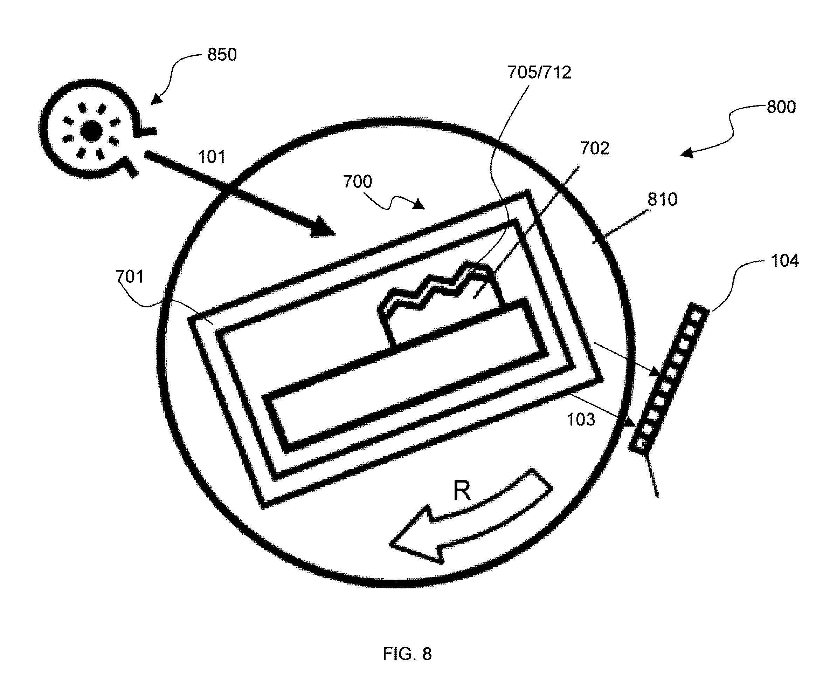

Referring now to **FIG. 8,** according to an embodiment of the invention, an authentication system **800** comprises a inspection platform **810** embodied, for example by a rotatable turntable adapted to be rotated, e.g., as schematically indicated with arrow R, and adapted to receive goods **700** comprising an intensity-modulating surface **705.** A radiation source **850** irradiates electromagnetic radiation on goods **700,** and the resulting transmitted electromagnetic radiation **103** is detected with radiation detector device **104,** which may be adapted to detect one- or two-dimensional radiation. The geometric arrangement of radiation source **850** and radiation detector device **104** defines the position between rotary table **810** and radiation source **850.** Rotary table **810** is adjusted until maximum contrast in the detected transmitted electromagnetic radiation **103** is achieved.

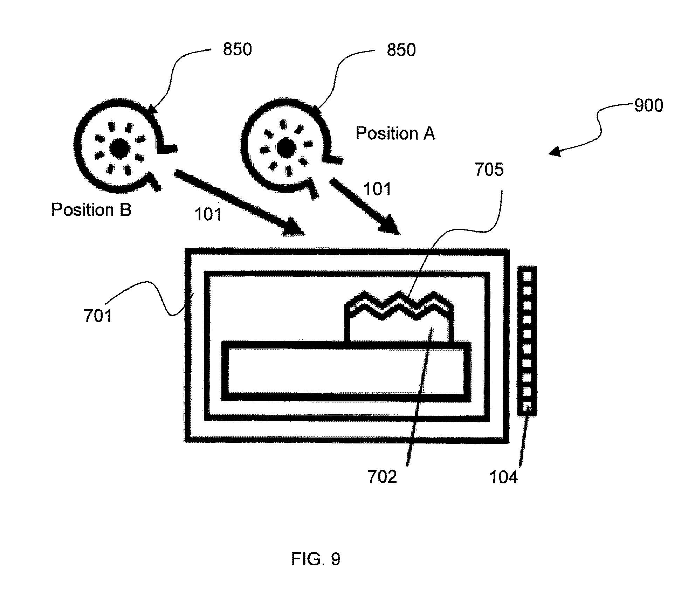

Additional reference is now made to **FIG. 9.** According to an embodiment of the invention, in an authentication system **900,** inspection platform **810** holding goods **700** may remain stationary with respect to world coordinates whereas the position of radiation source **850** may instead be changeable with respect to inspection platform **810** and thus with respect to goods **700,** as is schematically indicated with position **A** and position **B.** More specifically, radiation source **850** may be displaceable, for example, automatically, to different positions, e.g., laterally, which may result in different orientations between the propagation direction of incident electromagnetic radiation **101** and intensity-modulating surface **705.** For at least some of the different positions of radiation source **850** a transmission image is detected with radiation detector device **104,** until an intensity profile enabling the detection thereof for transmitted electromagnetic radiation **103** is found. Depending on the geometric extent of radiation detector device **104,** it may possible to leave its position fixed with respect to the position of goods **700.** Alternatively, it may be necessary to move radiation detector device **104** as well in accordance with the displacement of radiation source **850,** in order to ensure that the same location of goods **700** is observed.

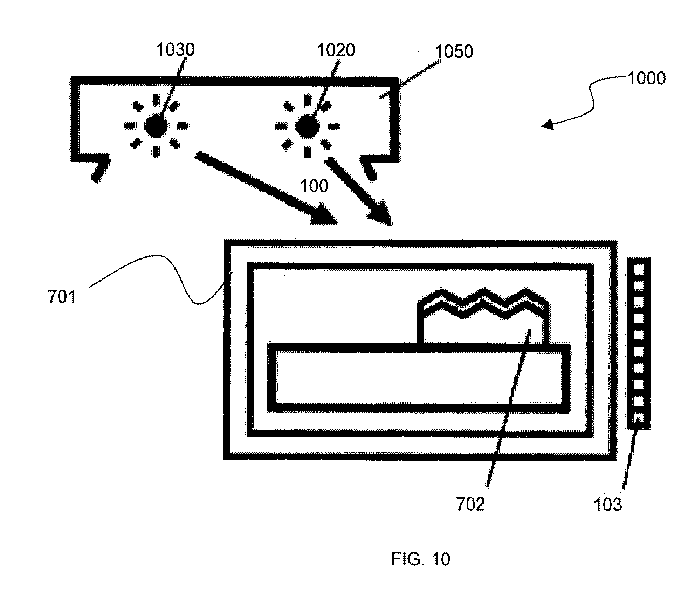

Reference is now made to **FIG. 10.** According to an embodiment of the invention, an authentication system **1000** comprises an extended radiation source **1050** enabling to produce spots of emitted radiation at different locations like, for example, location **1120** and **1130,** by electronic scanning. It may thus be concluded that radiation source **1050** is displaceable. In the case of infrared radiation, this can be achieved, for example, by providing a one- or two dimensional arrangement of individual infrared light-emitting diodes (IR-LEDs), and each IR-LED can be switched on or off independently of the others. In the case of X-ray radiation this can be achieved, for example, by providing a vacuum enclosure containing a source of free electrons and electromagnetic means to direct the beam of electrons to different locations on a radiation target, where X-ray radiation is being produced on impact. By employing such an extended, electronically switchable radiation source **1050,** it is possible to change the effective location of the spot of incident electromagnetic radiation **101** and its associated direction of propagation. For each of the displaced locations of radiation emission a transmission image is detected with the radiation detector device **104,** until a transmitted intensity profile with sufficient high contrast is found.

It should be noted that in some embodiments of the invention, a portable authentication system may only optionally comprise an inspection platform. The inspection platform may for example be embodied by any platform adapted to receive goods, such as, for example, a regular table.

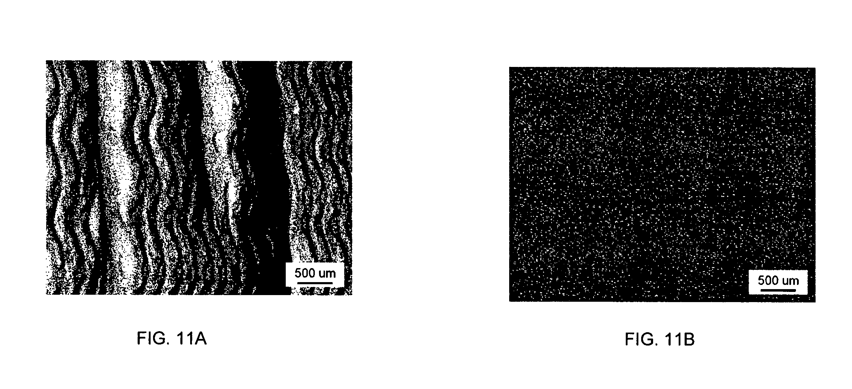

Referring now to **FIG. 11A,** an image representation of a desired intensity profile generated by an intensity-modulating surface implemented by periodical pyramids. The height-structured surface is embossed in paper with an enhancement layer of aluminum with a thickness of about 5 μm. In this example, the paper is 15° out of axis of the X-ray radiation, representing an intensity-modulating orientation enabling the detection of the intensity profile. In **Figure 11B,** the intensity profile of the same height-structured surface is shown with the paper perpendicular to the radiation direction, wherein no contrast may be detectable.

A method for manufacturing an authentication item according to embodiments of the invention is outlined hereinafter with reference to thermoforming. According to embodiments of the disclosed technique, thermoforming may comprise the following procedures: obtaining a plastic film or sheet, e.g., by unwinding the plastic film or sheet from a reel; preheating the plastic sheet to a preheat temperature, e.g., by guiding the same through a preheating station on a blister line, wherein the preheat temperature is such that the plastic film will soften and become moldable, e.g., by maintaining upper and/or lower preheating plates of the preheating station at the preheat temperature. The procedure may then include molding a blister cavity into a negative mold, by subjecting the moldable plastic film to a molding pressure, of, e.g., 4 to 8 bar, generated in a forming station. The molded plastic sheet is then cooled such that it becomes rigid again and maintains its shape when removed from the forming station. In case of difficult moldable shapes, the warm film will be physically pushed down partially into the cavity by a "plug-assist" feature. Prior to the thermoforming, one- or two-dimensional patterns for generating the blister cavities are manufactured in the surface of the thermoforming tools. As the pattern is between the cavities of the blister, a backside aluminum foil may act as an enhancing layer of the molded plastic film.

**Claims**

1. An authentication item provided on goods (600, 700) for encoding said goods (600, 700) as being authentic, **characterized in that**
   said authentication item is an intensity-modulating surface (105, 106) comprising a plurality of adjacent protrusions such that said intensity-modulating surface (105, 106) has alternating height;
   wherein each of said protrusions has at least two slopes (111,112) of respective different orientation;
   wherein said authentication item, when being in an authenticating position with respect to incident electromagnetic radiation (101) employed for authentication, modulates the intensity of said incident electromagnetic radiation (101) in a manner that generates an intensity profile which is characteristic of said authentication item.

2. The authentication item of claim 1, **characterized in that**
   said authenticating position is attained if the propagation direction of said incident electromagnetic radiation (101) is at least approximately parallel to one of said at least two slopes (111,112) of said plurality of protrusions.

3. The authentication item of any of the preceding claims, **characterized in that**
   said intensity-modulating surface (105, 106) is the surface of said goods (600, 700).

4. The authentication item of claims 1 or 2, **characterized in that**
   said intensity-modulating surface (105, 106, 505, 605, 705) is a contrast-enhancing layer (512, 612, 712) provided on the surface of said goods (600, 700) constituting the substrate for said contrast-enhancing layer (512, 612, 712), wherein said contrast-enhancing layer (512, 612, 712) effects an increased attenuation of intensity of said incident electromagnetic radiation (101), compared to the attenuation effected by said goods (600, 700).

5. The authentication item of claim 4, **characterized in that**
   said contrast-enhancing layer(512, 612, 712) has a thickness ranging between 5 nm to 1 mm.

6. A method of manufacturing the authentication item according to any of the preceding claims, **characterized by** employing at least one of the following procedures:

   printing, embossing, molding, injection-molding and thermoforming.

7. The method of manufacturing the authentication item of claim 6, **characterized in that**
   said thermoforming comprises the following procedures:

   preheating a plastic film to a preheat temperature to obtain a moldable plastic film;
   molding a blister cavity into said moldable plastic film by applying a molding pressure to obtain a molded plastic film; and
   cooling down said molded plastic film such that said molded plastic film maintains its shape.

8. The method for manufacturing of claim 7,
**characterized in that**
said molding pressure ranges from 4 to 8 bars.

9. An authentication system (800, 900, 1000) for the authentication of goods (600, 700), said authentication system comprising:

an inspection platform (810) adapted to receive said goods (600, 700);
a radiation source (150, 850, 1050) adapted to emit electromagnetic radiation (101) incident on said goods (600, 700); and
a radiation detector device (104) adapted to detect electromagnetic radiation transmitted through said goods (600, 700);
wherein said radiation source and said inspection platform (810) are operative such that the propagation direction of said electromagnetic radiation incident (101) on said goods (600, 700) is adjustable to different orientations, thereby enabling the detection of intensity profiles of said transmitted electromagnetic radiation for said different orientations to search for an intensity profile that is characteristic of an authentication item manufacturable on goods (600, 700).

10. The authentication system of claim 9, wherein said radiation source and said radiation detector device (104) are encased in a portable housing.

11. The authentication system of claim 10, wherein said inspection platform (810) is encased in said portable housing.

12. The authentication system of any of the claims 9 to 11, wherein said electromagnetic radiation is in the X-ray or infrared range.

13. The authentication system of any of the claims 9 to 12, wherein said inspection platform (810) is a rotatable turntable that enables obtaining said different orientations between said propagation direction and said goods (600, 700).

14. The authentication system of any of the claims 9 to 13, wherein said radiation source (850, 1050) enables generating different orientations between said incident electromagnetic radiation (101) and said goods (600, 700) by displacement of said radiation source (850) or by scanning with said radiation source (1050).

EP 2 233 314 A1

RADIATION SOURCE — 150

100

101

115

d

h

103

104

$I_T(X)$

X

FIG. 1

FIG. 2

EP 2 233 314 A1

FIG. 3A

FIG. 3B

FIG. 3C

EP 2 233 314 A1

FIG. 4B

FIG. 4A

FIG. 5A

FIG. 5B

FIG. 6

EP 2 233 314 A1

RADIATION SOURCE —— 150

701

101

700

705/712

702

103

104

**FIG. 7A**

RADIATION SOURCE —— 150

701

101

700

705/ 712

702

103

104

**FIG. 7B**

FIG. 8

EP 2 233 314 A1

FIG. 9

FIG. 10

FIG. 11B

FIG. 11A

Europäisches
Patentamt

European
Patent Office

Office européen
des brevets

# EUROPEAN SEARCH REPORT

**Application Number**

EP 09 15 6340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/013000 A2 (GIESECKE & DEVRIENT GMBH [DE]; ADAMCZYK ROGER [DE]; BALDUS CHRISTOPH []) 29 January 2009 (2009-01-29) * page 10, line 22 - page 11, line 4 * * page 16, lines 4-22 * * page 21, line 24 - page 22, line 12; claims 33-37; figures 2a,2b * | 1-8 | INV. B42D15/00 B42D15/10 G07D7/06 |
| X | US 6 036 233 A (BRAUN ECKHARD [DE] ET AL) 14 March 2000 (2000-03-14) * column 1, lines 19-23 * * column 3, lines 18-29 * * column 3, lines 51-64; figures 1,3,22 * | 1-8 | |
| X | WO 2007/115656 A2 (GIESECKE & DEVRIENT GMBH [DE]; BALDUS CHRISTOF [DE]; VOIT MAX [DE]; ZE) 18 October 2007 (2007-10-18) * page 15, lines 17-28 * * page 17, line 26 - page 18, line 12 * * page 22, line 28 - page 26, line 13; figures 1,5 * | 1-3,6-8 | |
| X | US 2006/262894 A1 (BERNHARDT PHILIPP [DE] ET AL) 23 November 2006 (2006-11-23) * paragraph [0024]; figure 1 * | 9,12,14 | TECHNICAL FIELDS SEARCHED (IPC) B42D G07D |
| Y | WO 2008/134910 A1 (BOEGLI GRAVURES SA [CH]; BOEGLI CHARLES [CH]) 13 November 2008 (2008-11-13) | 1-8 | |
| A | * page 5, line 34 - page 6, line 6 * * page 7, line 23 - page 8, line 10 * * page 8, line 25 - page 9, line 17; claims 1,2 * | 9-14 | |
| Y | EP 1 437 213 A1 (BOEGLI GRAVURES SA [CH]) 14 July 2004 (2004-07-14) * paragraphs [0038], [0039]; figures 9-10 * | 1-8 | |

The present search report has been drawn up for all claims

| Place of search | Date of completion of the search | Examiner |
|---|---|---|
| Munich | 16 November 2009 | D'Incecco, Raimondo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 6340

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2009

| Patent document cited in search report | | Publication date | Patent family member(s) | | Publication date |
|---|---|---|---|---|---|
| WO 2009013000 | A2 | 29-01-2009 | DE 102007035161 A1 | | 29-01-2009 |
| US 6036233 | A | 14-03-2000 | AT | 250508 T | 15-10-2003 |
| | | | AU | 7562096 A | 29-05-1997 |
| | | | BG | 64379 B1 | 30-12-2004 |
| | | | BG | 101719 A | 31-03-1998 |
| | | | BG | 108790 A | 31-01-2005 |
| | | | BG | 65294 B1 | 28-12-2007 |
| | | | CA | 2209285 A1 | 15-05-1997 |
| | | | DE | 19541064 A1 | 07-05-1997 |
| | | | DE | 19680958 D2 | 02-12-1999 |
| | | | DK | 801604 T3 | 02-02-2004 |
| | | | WO | 9717211 A1 | 15-05-1997 |
| | | | EP | 0801604 A1 | 22-10-1997 |
| | | | ES | 2205064 T3 | 01-05-2004 |
| | | | JP | 11501590 T | 09-02-1999 |
| | | | PL | 321140 A1 | 24-11-1997 |
| | | | PT | 801604 E | 27-02-2004 |
| | | | RU | 2161092 C2 | 27-12-2000 |
| | | | US | 6283509 B1 | 04-09-2001 |
| WO 2007115656 | A2 | 18-10-2007 | DE 102006016342 A1 | | 11-10-2007 |
| | | | EP | 2007586 A2 | 31-12-2008 |
| US 2006262894 | A1 | 23-11-2006 | CN | 1864632 A | 22-11-2006 |
| | | | DE 102005022540 A1 | | 23-11-2006 |
| WO 2008134910 | A1 | 13-11-2008 | NONE | | |
| EP 1437213 | A1 | 14-07-2004 | CA | 2453827 A1 | 23-06-2004 |
| | | | JP | 2004203046 A | 22-07-2004 |
| | | | US | 2004151796 A1 | 05-08-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006027688 A, Walter
- US 20080199406 A, Walter
- US 20030194053 A, Schramm
- EP 1348575 A, Landqart